# EUROPEAN PATENT APPLICATION

(11) **EP 4 197 761 A1**
(43) Date of publication of application: **21.06.2023**
(21) Application number: 21306805.9
(22) Date of filing: 16.12.2021
(51) Int. Cl.: B29D 11/00, B29C 61/02

(54) **METHOD FOR THERMOFORMING A FILM BY THERMAL SHRINKAGE AND LAMINATION THEREOF ON AN OPTICAL ARTICLE**

(71) Applicant: Essilor International, 94220 Charenton-Le-Pont (FR)
(72) Inventor: SOON, Jia Mei, 91320 Wissous (FR); HENRION, Sébastien, 94000 Creteil (FR); MARCHAL, Jeanne, 75012 Paris (FR)
(74) Representative: Jacobacci Coralis Harle

(57) **Abstract**

A method comprising providing an article having a non-zero radius of curvature and a thermoplastic film, moving relatively to each other said thermoplastic film and said article to bring them into contact, applying heat to the thermoplastic film so that the heated thermoplastic film shrinks and takes the shape and curvature of the article, resulting in a thermoformed thermoplastic film, and optionally laminating said thermoformed thermoplastic film on a surface of an optical article by means of a layer of adhesive, said layer of adhesive being positioned between the optical article and the thermoplastic film.

## Description

The present invention relates to a process for thermoforming a film, such as a film comprising one or more functional coatings, and applying it on a curved surface of an optical article substrate, preferably on the substrate of an ophthalmic lens.

It is often useful to bond a functionalized film to a curved face of an optical article such as an optical lens, a spectacle eyeglass or a screen, to give it a desired property. For example, the thermoplastic film may be a film comprising an interferential coating, antistatic functionality, polarizing functionality, contrast-enhancing functionality or photochromic functionality.

Given that the face of the optical article is curved (convex or concave), and that the functional film is initially flat, the thermoplastic film is usually stretched to conform to the surface of the optical article, thereby stretching the multilayer coating. Stretching shall in fact be avoided because it entails a high risk of tearing and/or cracking the layers of the multilayer coating.

Interferential coatings, in particular antireflection coatings, are generally formed from a multilayer stack of dielectric mineral materials such as SiO, SiO₂, Si₃N₄, TiO₂, ZrO₂, Al₂O₃, MgF₂ or Ta₂O₅.

One of the problems encountered for all types of interferential coatings is their great fragility mainly due to their mineral nature. Organic coatings, depending on their nature, can be brittle too, for example those that are silane based. These coatings may find it difficult to undergo a deformation or a substantial expansion since the stress experienced often results in cracking that propagates over the whole of the surface of the coating, generally making it unusable. Thus, interferential coatings comprising inorganic layers have a tendency to crack, including for small degrees of deformation, for example of the order of 1%. A solution to apply films having antireflective coatings onto a lens by a lamination process is to apply them as smaller patches to limit cracks, which adds an additional step to the lamination process, and renders the automation of the process impossible.

In order to limit the occurrence of degradations of the functional film, other solutions propose to preform it, by giving it a curvature close to that of the substrate to be coated, before quickly applying it to the substrate and making it adhere thereto by means of an adhesive. In particular, the thermoplastic film may be preformed by thermoforming, by stretching the thermoplastic film until a suitable curvature is obtained, using mechanical or gas pressure to stretch and deform the thermoplastic film. In this case, the heating of the thermoplastic film usually makes it more flexible so that the deformation of the thermoplastic film creates less damage therein. Yet, lamination has to take place immediately after shaping; otherwise, the preformed film loses its shape.

The application WO 2006/105999, in the name of the applicant, describes a process for laminating a functionalized flexible flat film onto an optical lens by conforming it to this lens. This process makes it possible to cover the whole of the surface of the lens but gives rise to increased deformations in the functionalized film, to the extent that it is usable preferably for optical articles having a small curvature. Indeed, the process induces deformation in the thermoplastic film due to its stretching in order to adapt a planar geometry to a pseudo-spherical geometry. The degrees of deformation induced in the thermoplastic film may reach 10%.

The application WO 2009/021793, in the name of the applicant, makes it possible to laminate a functional film having a substantially flat initial shape onto a curved face of a substrate. It comprises a step of deforming the functional film to the curvature of the substrate, during which this functional film is retained on a face of a deformable auxiliary membrane by suitable connecting means so that the shape of the functional film varies in accordance with a deformation and a stretching of the membrane, the functional film remaining parallel to the membrane, only the auxiliary membrane being held by mechanical means at its perimeter, the functional film being kept in contact with said auxiliary membrane only by said connecting means; and the connecting means are additionally suitable so that portions of the functional film can move locally relative to and parallel to the membrane during the deformation step. This process makes it possible to use articles with greater curvatures, the functional film stretching less than the membrane despite being brought to the same curvature, but on the other hand the surface of the optical article substrate covered by the functionalized film is generally more limited, since it is necessary to use a functionalized film of smaller dimensions.

Other lamination processes by stretching the thermoplastic film over the optical article to take the curvature of the optical article are disclosed in US 2018/231691, US 2016/052201, WO 2017/146201 and WO 2017/010218.

Delaminations and/or creases may also appear in the thermoplastic film when it is applied to the face of the optical article, due to the difference in curvature between this face and the thermoplastic film.

Furthermore, the deformation of the functional film with a view to conforming it to the geometry of the surface of the curved optical article induces a shift of the optical properties of this film toward a set of values more or less distant from the target values, due in particular to the modification of the thicknesses of the layers of the stack taking place during the deformation.

One objective of the present invention is therefore to provide a novel process for bonding a film to a curved substrate, in order to transfer a functional film by lamination in a more flexible manner, and for which process the deformations that are created in the functional film are reduced and generate fewer defects in the thermoplastic film. Advantageously, this process is used to provide in particular an interferential functionality, by means of a functional film as described above, to a substrate. It will easily be understood that within this context of use, the process must make it possible to retain the optical or even dioptric properties of the optical article, and also the cosmetic properties thereof in order to guarantee an optimal optical transparency for such a functionalized object, in particular if it is intended to correct or protect vision. Finally, this process must make it possible to maintain the integrity of the function(s) present within the functional film when it passes from a flat surface to a curved surface.

Another objective of the invention is to provide a process for manufacturing an article equipped with a functional coating that is simple, easy to carry out and reproducible.

These problems are solved according to the invention by modifying the thermoforming step of the thermoplastic film, which is no longer performed by stretching, but rather by thermally shrinking the thermoplastic film around the curvature of the optical article.

A film shaped by shrinkage will impose less stress on the thermoplastic film and its functional layers than one shaped by stretching. In addition, unlike a stretched-thermoformed film, a shrunk-thermoformed film can hold its thermoformed shape well and be stored without being immediately laminated to the optical article. In addition, films bearing functional layers are not damaged when the thermoforming is done by shrinkage, and no optical defects will be created as an undesirable side effect of the process.

The objectives set are therefore achieved according to the invention by a process comprising the following successive steps:
a) providing an article having a non-zero radius of curvature and a thermoplastic film,
b) moving relatively to each other said thermoplastic film and said article to bring them into contact,
c) applying heat to the thermoplastic film so that the heated thermoplastic film shrinks and takes the shape and curvature of the article, resulting in a thermoformed thermoplastic film.

The invention also relates to a process for preparing an optical article having a non-zero radius of curvature coated with a film, comprising the above steps a) to c) in which the article is a mold part and further comprising, after step c):
d) laminating said thermoformed thermoplastic film on a surface of an optical article having a non-zero radius of curvature by means of a layer of adhesive, said layer of adhesive being positioned between the optical article and the thermoplastic film,
e) obtaining an optical article having a non-zero radius of curvature coated with the layer of adhesive and the thermoplastic film,
wherein the mold part has a surface sensibly matching the surface of the optical article intended to be laminated with the thermoplastic film or complementary to said surface.

The invention also relates to a process for preparing an optical article having a non-zero radius of curvature coated with a film, comprising the above steps a) to c) in which the article is an optical article and further comprising, after step c):
d) laminating said thermoformed thermoplastic film on a surface of the optical article by means of a layer of adhesive, said layer of adhesive being positioned between the optical article and the thermoplastic film,
e) obtaining an optical article having a non-zero radius of curvature coated with the layer of adhesive and the thermoplastic film.

The invention will be described in greater detail with reference to the appended drawing, in which figure 1 is a representation of a thermoplastic film bearing a pressure sensitive adhesive layer protected by a liner film, figures 2-5 represent different stages of thermoforming a thermoplastic film according to the process of the invention, and figure 6 represents different stages of laminating a thermoformed thermoplastic film on an optical article according to a specific embodiment of the process of the invention.

In the present patent application, when an article comprises one or more coatings at its surface, the expression "to deposit a layer or a coating on the article" means that a layer or a coating is deposited on the uncovered (exposed) surface of the external coating of the article, that is to say its coating furthest from the substrate.

A coating which is "on" a substrate or which has been deposited "on" a substrate is defined as a coating which (i) is positioned above the substrate, (ii) is not necessarily in contact with the substrate (although it preferably is in contact), that is to say one or more intermediate coatings can be positioned between the substrate and the coating in question, and (iii) does not necessarily completely cover the substrate (although it preferably covers it). When "a layer 1 is located under a layer 2", it will be understood that the layer 2 is further from the substrate than the layer 1.

The article produced according to the invention comprises a substrate, preferably a transparent substrate, having front and back main faces, at least one of said main faces and preferably both main faces comprising a laminated thermoplastic film.

In case of a lens, the "back face" or "rear face" of the substrate (the back face generally being concave) is understood to mean the face which, when the article is being used, is closest to the eye of the wearer. Conversely, the "front face" of the substrate (the front face generally being convex) is understood to mean the face which, when the article is being used, is furthest from the eye of the wearer.

The article according to the invention can be an optical filter, better still an optical lens, and even better still an optionally corrective ophthalmic lens for spectacles, or an optical or ophthalmic lens blank such as a semi-finished optical lens, in particular a spectacle eyeglass, or a pair of protective glasses which can be used in particular in a working environment, or a mold part. The lens can be a polarized or tinted lens or a photochromic or electrochromic lens.

In one embodiment, the article used for the forming step is the same as the optical article on which the thermoplastic film is laminated.

Alternatively, instead of directly using the actual optical article, the article used for the forming step is a mold part, with a surface sensibly matching the surface of the optical article intended to receive the thermoplastic film or sensibly complementary to it.

In view of the disclosure, related to the thermoforming of films intended to be applied onto an optical surface, the expression "sensibly matching" referring to curved surfaces of optical articles means that the two curved surfaces have 2 diopter (D) or less of difference in the direction of greater curvature and in the direction of lower curvature, preferably 1.5 D or less, preferably 1 D or less, preferably 0.5 D or less, or even having less than 0.25 D of difference.

The unit diopter here is measured as the value D(1.53) known to the ophthalmic industry to characterize surface curvatures, expressing thus the optical power a glass lens with an index of 1.53 would have if made with one flat surface and the other surface having the "measured" curvature. In particular, according to this method, D = 0.53/R, with R being the radius of curvature, positive for convex surfaces, negative for concave surfaces. It is noted however that a given difference in diopter between two surfaces doesn't imply a predetermined difference in radius; the difference in radius will depend on the radius of at least one of the surfaces which are compared together.

As a further application of the definition above on "sensibly matching": when the film is intended to be applied directly on a convex surface without curvature inversion, as described in embodiments below, it is implied that the mold would have a slightly lower curvature than that of the surface so that the film may be applied without trouble. When the film is intended to be applied on a convex surface with a process using a curvature inversion, it is possible to have a mold with exactly the same curvature as that of the surface.

Conversely when the film is intended to be applied on a concave surface; it is implied that the mold would have a slightly higher curvature in absolute value than that of the surface so that the film may be applied without trouble.

Regarding the specific case of progressive addition lenses, also known as PAL, or progressive lenses, the words "sensibly matching" means that the curvature of the mold "sensibly matches" the curvature in the "far vision zone" of the PAL. In some embodiments, the mold may further have a progressive surface, and the progressive part of the surface may differ from the curvature of the progressive surface of the optical article by 2 D or less, preferably 1.5 D or less, preferably 1 D or less, or even 0.25 D or less.

By a surface complementary to another second surface, it is meant a surface that has a curvature inverted to said second surface, such as a convex surface is sensibly complementary to a concave surface if they have sensibly the same radius of curvature in absolute value; respectively, a surface complementary to a convex surface is a concave surface with sensibly the same radius of curvature, in absolute value. The same interpretation applies to "sensibly complementary" as thus described above for "sensibly matching".

In particular, in some embodiments of the disclosure, when it is intended to laminate the thermoplastic film on a concave surface of an optical article, it is proposed, using a process according to the disclosure, to thermoform the thermoplastic film on a convex surface having sensibly the same curvature as the concave surface of the optical article, in absolute value.

In other words, a mold part or carrier with the same curvature as the target optical article or a matching curvature (i.e., approximately the same) can be used as an article in the present process. Accordingly, within the meaning of the disclosure, the expression "article" may also pertain to an optical mold part, i.e., a mold part having sensibly the same shape or sensibly the complementary shape of the optical article on which the thermoplastic film is intended to be laminated.

Other than the case of an optical mold part, an article within the meaning of the disclosure is an optical article which may be part or whole of any ophthalmic elements and devices. Non-limiting examples of ophthalmic elements include corrective and non-corrective lenses, including single vision or multi-vision lenses, which may be either segmented or non-segmented, as well as other elements used to correct, protect, or enhance vision, magnifying lenses and protective lenses or visors such as found in headgears such as spectacles, glasses, goggles and helmets, with or without embedded electronics. The article of the present invention is preferably a lens, and more preferably an ophthalmic lens adapted to be mounted in headgears.

The substrate of the article according to the invention can be a mineral glass, but is preferably an organic glass, for example made of thermoplastic or thermosetting plastic. This substrate can be chosen from the substrates mentioned in the application WO 2008/062142, for example a substrate obtained by (co)polymerization of diethylene glycol bis(allyl carbonate), a substrate made of poly(thio)urethane or based on polyepisulfides or a substrate made of (thermoplastic) bisphenol A polycarbonate, denoted PC, or a substrate made of PMMA (polymethyl methacrylate).

The thermoplastic film according to the invention may be laminated on at least one of the main faces of a bare substrate, i.e., an uncoated substrate, or on at least one of the main faces of a substrate already coated with one or more functional coatings.

Indeed, in some applications, it is preferable for the main surface of the substrate to be coated with one or more functional coatings prior to the deposition of the interference coating. These functional coatings, which are conventionally used in optics, may, without limitation, be a primer layer for improving the impact resistance and/or adhesion of subsequent layers in the final product, an abrasion-resistant and/or scratch-resistant coating, a polarized coating, a photochromic coating, an electrochromic coating or a tinted coating. It should be noted that if an abrasion-resistant and/or scratch-resistant coating is present on the thermoplastic film, it is generally unnecessary to provide a second one thereof beneath this film, in the order of stacking. Similarly, the thermoplastic film according to the invention bonded via an adhesive layer to the substrate of the optical article may in certain cases replace the primer layer conventionally used to improve impact resistance and/or adhesion.

Before the thermoplastic film is deposited on the substrate, which is optionally coated, for example, with a colored filter or a polar film, it is common to subject the surface of said optionally coated substrate to a physical or chemical activation treatment intended to increase the adhesion of this coating. This pre-treatment is generally but not necessarily carried out under vacuum. It may be a bombardment with energetic and/or reactive species, for example an ion beam (ion pre-cleaning or IPC) or an electron beam, a corona discharge treatment, a glow discharge treatment, a UV treatment or a vacuum plasma treatment. It may also be an acidic or basic surface treatment and/or a surface treatment with solvents (water or organic solvent). These treatments are described in greater detail in application WO 2014/199103.

Similarly, before the deposition of functional coatings on the thermoplastic film, its surface may be subjected to an activation or cleaning treatment such as the treatments envisaged above, in particular treatment with an aqueous solution of sodium hydroxide, concentrated to 10%, at 60°C for 4 minutes, followed by a step of rinsing with softened water and drying with hot air (60°C). Before the application of a layer of adhesive to a surface of this film, this surface is preferentially subjected to an oxygen plasma surface treatment under reduced pressure.

The preferred thermoplastic films have a high optical quality, without defects visible under an arc lamp. They should allow the final optical article to be edged, i.e., in case of a lens, machining the edge or the periphery of the lens so as to conform it to the size and the shape required for adapting the lens to the spectacle frame into which it is intended to be inserted.

The thermoplastic film of polymer nature may be composed of one or more preferentially transparent polymers, i.e., a polymer having a light scattering of less than 0.5%, preferably between 0.2% and 0.3% and a transmission factor at least equal to 90%, preferably between 93% and 98% (these scattering and transmission factor measurements are carried out according to the ASTM D1003 standard on a Haze-Gard instrument). When functional coatings are present on its surface, the thermoplastic film acts as a deformable support.

Its glass transition temperature, measured by DMA (dynamic mechanical analysis) is above the usage temperature of the optical article, which is usually room temperature. The glass transition temperature of the thermoplastic film generally varies from 50°C to 250°C, preferably from 70°C to 200°C. A glass transition temperature lower than or equal to 200°C is preferred to easily apply the thermoplastic film on plastic substrates by thermoforming.

At the usage temperature, the thermoplastic polymer film is therefore not in the rubbery state but in the glassy state.

The thermoplastic film preferably comprises at least one polymer chosen from PET (polyethylene terephthalate), a polyurethane, COPs and COCs (cyclolefin polymers and copolymers), polycarbonate, poly(methyl methacrylate), polystyrene, polyvinyl alcohol, cellulose acetate butyrate (CAB), or a cellulose acetate such as cellulose triacetate (TAC), preferably PET and TAC. Ideally it is a film based on cellulose triacetate preferably having a glass transition temperature of between 100°C and 180°C or a film based on PET preferably having a glass transition temperature of between 50°C and 150°C.

The thermoplastic film is preferably made of a material exhibiting a sensibly isotropic or isotropic thermal shrinkage in step c).

By sensibly isotropic shrinkage, it is meant that there is less than 25%, more preferable less than 10% difference between the longitudinal contraction and transversal contraction of a film heated at 110°C for 3h, as evaluated in the experimental part based on the difference between the two contraction rates normalized over the greater of the two contraction rates.

The thickness of this thermoplastic polymer film provided in step a) preferably ranges from 10 to 500 µm, preferably from 30 µm to 200 µm, in particular from 40 µm to 150 µm and ideally from 25 µm to 50 µm. In a preferred embodiment, the thermoplastic film provided in step a) has a thickness of 80 µm or less, or even 60 µm or less, for example 50 µm or less.

Contrary to the processes of the prior art involving thermoforming by stretching, which work better with thick films having a thickness higher than 80 µm, often necessary to ensure film cohesion during the forming and stretching, the present process works over a large range of film thicknesses. The use of thinner films having a thickness lower than or equal to 80 µm should be avoided by the stretching method disclosed, e.g., in WO 2006/105999, WO 2009/021793 and US 2018/231691 because the risk of breakage of such films is high. Some part so the thermoplastic film might be stretched out too thin and a hole could be created. This is the contrary in the present disclosure, for which thinner films are easier to shrink.

The thermoplastic film may be coated on at least one of its faces with one or more functional coatings such as a layer of impact-resistant primer, an anti-abrasion and/or anti-scratch coating (hard coat), a polarized coating, a hydrophobic and/or oleophobic coating (anti-smudge top coat), an anti-fogging coating, a photochromic coating or a colored coating, an interferential coating, in particular an abrasion-resistant and/or scratch-resistant coating coated with an interferential coating, a colored filter, an antibacterial coating, a microstructured coating. Thus, the thermoplastic film according to the invention may be used to give an optical article numerous functionalities such as an abrasion-resistant, scratch-resistant, anti-fogging and/or anti-smudge function.

Coatings that are resistant to abrasion and/or to scratching are preferably hard coatings based on poly(meth)acrylates or silanes generally comprising one or more mineral fillers intended to increase the hardness and/or refractive index of the coating once hardened. (Meth)acrylate means an acrylate or a methacrylate.

Among the coatings recommended in the present invention may be mentioned coatings based on hydrolysates of epoxysilanes such as those described in patents EP 0614957, US 4,211,823 and US 5,015,523. The thickness of the anti-abrasion and/or anti-scratch coating is generally in the range from 1 to 15 µm, preferably from 2 to 5 µm. The abrasion-resistant and/or scratch-resistant coating may be applied according to known processes, for example by dip coating, by spin coating, by bar coating or by spray coating.

The interferential coating may be, non-exhaustively, an antireflective coating, a reflecting (mirror) coating, an infrared filter, a filter or an antireflective coating at least partially cutting out blue light, or an ultraviolet filter, preferably an antireflective coating. The filter may contain one or more absorbing dyes.

An antireflective coating is defined as a coating, deposited on the surface of an article, which improves the anti-reflecting properties of the finished article. It makes it possible to reduce the reflection of light at the article-air interface over a relatively wide portion of the visible spectrum. Preferably Rv, the mean light reflectance value, is below 2.5% per face of the article.

Rv is as defined in standard ISO13666:1998 and is measured according to standard ISO 8980-4 (for an angle of incidence of the light below 17°, typically 15°). It is the weighted spectral reflection average over the whole visible spectrum between 380 and 780 nm. Preferably Rv<2%, better still Rv<1.5% and even better Rv<1%.

As is also well known, antireflective coatings conventionally comprise a monolayer or multilayer stack of dielectric materials. These are preferably multilayer coatings, comprising layers with high refractive index (HI) ≥ 1.5 and layers with low refractive index (LI) < 1.5.

The total thickness of the interferential coating is preferably lower than or equal to 1 µm, more preferably lower than or equal to 800 nm and even more preferably lower than or equal to 500 nm. The total thickness of the interferential coating is generally higher than 100 nm, and preferably larger than 150 nm.

The constitution of these coatings, their thickness and their method of deposition are notably described in application WO 2010/109154.

The process according to the invention will now be described in detail.

According to the invention, the process involves thermally conforming the thermoplastic film to the shape of the article by shrinking and adhering it to the surface thereof. Concretely, the thermoplastic film is heated so as to shrink around the surface of the article to be covered by the thermoplastic film and is thus shaped. Said shaped film is then laminated to the surface of the optical article, by bonding onto the optical article via an adhesive layer, said adhesive layer being positioned between the optical article and the surface of the thermoplastic film.

Usually, the layer of adhesive is present on the thermoplastic film provided in step a), i.e., has been deposited or laminated before thermoforming, so that both the layer of adhesive and the thermoplastic film are thermoformed at the same time during step c), resulting in both having the required non-zero radius of curvature without any risk of discrepancy of curved shape.

The thermoforming converts the flat or substantially flat thermoplastic film into a curved thermoformed film, which retains this shape once cooled.

The optical article that is used has a curved surface on which the lamination will take place. The radius of curvature of said surface of the article generally varies from 48 to 350 mm. This surface may be convex or concave. The article generally has a diameter of between 55 and 90 mm.

The thermoplastic film provided in step a) is generally of greater dimension than the article, which means that the diameter of the thermoplastic film is higher than the diameter of the article.

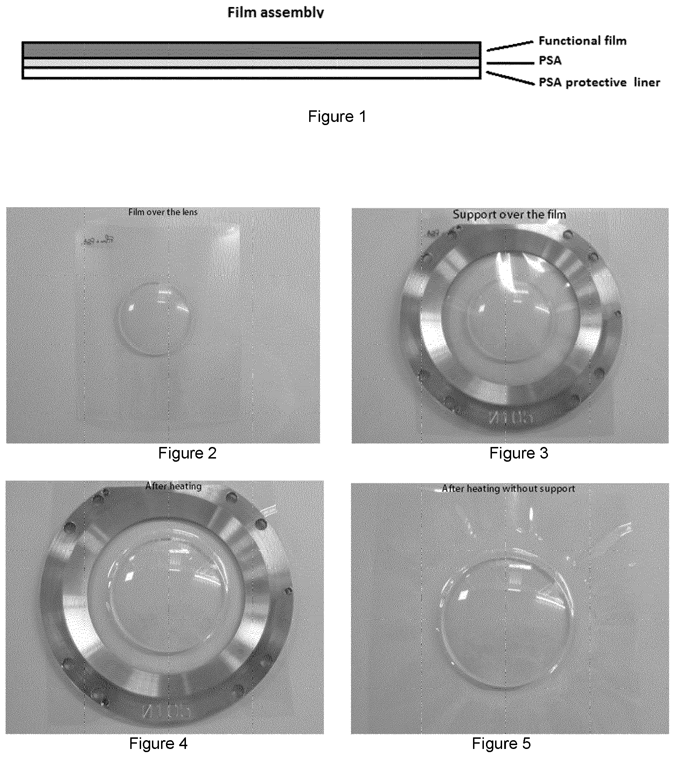

Said thermoplastic film to be thermoformed and laminated (with or without coatings on one of its surfaces) is positioned over the article. This can be done as shown on figure 2, where a thermoplastic film is positioned over the convex face of an article. The thermoplastic film can be provided with a pressure sensitive adhesive layer protected with a protective liner film to prevent said layer from sticking to the article. This configuration is schematized on figure 1.

In step b), said thermoplastic film and said article are moved relatively to each other to bring them into contact.

To prevent the thermoplastic film from moving during the application of heat, a holding means or support such as a film holder having an annular shape can be placed around the article to clamp the thermoplastic film against the article and maintain them in place relatively to each other during step c). This film holder preferably has an opening with a diameter larger than the diameter of the article, more preferably much larger. The film holder preferably holds the thermoplastic film by applying a force sufficient to bend the thermoplastic film and apply it onto the article but still allow the thermoplastic film to slide or move relative to the film holder during the shrinkage. This is different from the prior art processes such as in WO 2009/021793, where the thermoplastic film is firmly held in a support as any displacement of the thermoplastic film during the forming step would not allow for the plastic deformation inherent and vital for those forming methods.

One such way to hold the thermoplastic film appropriately for enabling the teaching of the disclosure is to have the film holder comprise 2 parts of a clamp, but have the two parts stay separated, at least where they are in contact with the thermoplastic film, by a distance greater than the thermoplastic film thickness. Another such way is to have the film holder apply a force on the thermoplastic film light enough, such as being below a few dozens N/cm², for example below 2000 N/m², or below 1500 or 1000 N/m², or even below 800 or 500 or 300 N/m², or even below 80, 50 or 30 N/m².

The immobilization of the thermoplastic film can be made by a film holder over an annular outline, as shown on figure 3, where a metallic film holder having an annular shape was used. In this embodiment, the thermoplastic film is held immobilized by mechanical means on the face of the article to be coated, the film holder thus deforming the thermoplastic film so that it cannot slide over the surface of the article due to gravity and any force applied by the heating step (such as air flows). Further the film holder may hold the thermoplastic film symmetrically, so that during shrinkage of the thermoplastic film any movement of the thermoplastic film due to the shrinkage is as symmetric as possible so as to not displace the part of the thermoplastic film which is applied to the center of the molding article.

In step b), part of the thermoplastic film is pushed past an initial point of contact with the article. Since the article has a non-zero radius of curvature, this generally results in the formation of gathers in the thermoplastic film at the periphery of the article. They are visible on figure 3 on the circumference of the article. Indeed, such movement makes the thermoplastic film bend around a central point and more generally bend around the convex surface of the molding article. It is to be noted that during this step the film is at a temperature which is far from the glass transition temperature. This is further an effect of the non-limiting holding means or support described above that enables lateral movement of the thermoplastic film. This indeed enables the movement of the film toward and past the article to apply enough force to bend the film, but not impose a plastic deformation through stretching of the thermoplastic film.

The wordings "part of the thermoplastic film is pushed past an initial point of contact with the article" will be explicated thereafter, according to the disclosure. For the sake of explanation, one will consider an axis of movement used to bring the thermoplastic film closer to the article, and one considers as convention that the article is at the bottom and the film is initially higher that the article. The article is further with a convex upper surface, the convex surface facing the film. Further, the highest point of the convex surface is called the apex. If the film is initially flat, a part of the surface of the article will become an "initial point of contact between the article and the thermoplastic film". In most cases, this initial point of contact is the highest point of the convex surface of the article. Further, according to the embodiment of the disclosure, it is ensured that after such contact between the film and the article, the movement of the film continues. Accordingly, while a part of the film, which is in contact with the article at the initial point of contact doesn't move anymore, parts of the film which are farther from said initial point of contact are lowered by the movement of the film holder below a height of the first point of contact. Thus, more parts of the film become in contact with the convex surface of the article. Further, the film is then generally bended, or cambered around the article.

Thus, the above wording means that parts of the film which are farther than the initial point of contact are lowered by the film holder until they are lower than the apex of surface the article.

In an embodiment, the upper surface of the article having edges, the edges of the film are further pushed past the edges of a spherical or pseudo spherical surface of the article.

The bending of the thermoplastic film prior the heating step has two positive effects, namely during the heating step, the sensibly isotropic stretching doesn't sensibly move the thermoplastic film relative to the article, or that at least such movement is sensibly symmetrically centered on the point of contact between film and article ; a second positive effect is that the bent position of the film around the article nudges the stretching film to stretch around the article and hold said article, improving the forming process.

Further, in an embodiment, said film holder is not in contact with the thermoplastic film in a geometrically defined surface where the thermoplastic film is in contact with the article or is intended to be in contact with the article after forming and shrinkage. In a further embodiment the holder is separated from the article by at least 5 millimeter (mm) or even a distance greater than 1 centimeter (cm), usually smaller than 10 cm, or even less than about 5 cm.

Indeed, as can be understood from the disclosure, the thermoplastic film is applied and deformed onto the (molding) article in a first step with conditions that don't allow for a stretching of the thermoplastic film nor for any plastic deformation or major elastic deformation. Accordingly, in most cases, to manage the stresses, the thermoplastic film creates some wrinkles or gathers in places where the thermoplastic film is in front of the molding article. According to the disclosure, such wrinkles or gathers disappear as the thermoplastic film shrink during the forming step, under application of a curing step. The film holder leaving the thermoplastic film free in part which are in front of the molding article enables that the shrinkage and that such release of the internal stress and smoothing of the wrinkles or gathers stay as unperturbed as possible.

It is to be noted that in the prior art processes, such as in WO 2009/021793, where the central part of the thermoplastic film is pushed against the optical article by means of a buffer pad, in combination with stretching of this film, said buffer pad is in contact with part of the thermoplastic film which is in front of the article it is pushed onto, the thermoplastic film being pressed between the optical article and the buffer pad.

During step c), the thermoplastic film is in contact with the article. The thermoplastic film provided in step a) is thermoformed by shrinkage so as to conform it to the geometry of the surface of the article. This generally produces a deformation of the thermoplastic film, between its flat (or substantially flat) initial state and its final curved state adapted to the curved face of the article, which has a non-zero radius of curvature. However, since no stretching of the thermoplastic film is performed during steps a) to e), the present process doesn't entail deformation in tension within the thermoplastic film or the coatings present on the thermoplastic film, which is a fundamental difference with the prior art processes. Said film is preferably not subjected to a mechanical deformation to a degree greater than or equal to 0.5% (in length) over at least one portion of its surface.

Indeed, since the thermoplastic film is heated so as to shrink around the surface of the article to be covered, it entails a different type of deformation of the thermoplastic film as compared the prior art processes that implement a film stretching, such as in US 2018/231691, WO 2006/105999 or WO 2009/021793 where the degree of deformation observed is much higher. Such deformation, being a deformation mostly in compression within the plane of the surface of the thermoplastic film, is less prone to create crazing and cracks within the coatings.

At any point of the surface, the degree of deformation according to the invention corresponds to the component of the deformation expressed along one direction of space such that the deformation is maximal at this point for the material in this direction.

The thermoforming step, which precedes the lamination step, is preferably carried out at a temperature below the glass transition temperature of the polymer or blend of polymers forming the thermoplastic film. Its purpose is essentially to give the thermoplastic film the shape of the surface to which it will be bonded, in order to prevent, during the bonding step, stresses, creases or damage of the coatings that may be borne by the thermoplastic film.

The modes for heating the thermoplastic film by irradiation or convection are well known to the person skilled in the art. Concretely, a heat source is brought close to the article and the thermoplastic film surface is preferably uniformly heated, for example with a heat gun. The shrinkage speed of the thermoplastic film can be controlled by adapting the applied temperature or the distance between the heat source and the thermoplastic film that is in contact with the article. Alternatively hot air may be blown onto the thermoplastic film, and the air flow may control the shrinkage speed. Applying heat makes the thermoplastic film shrink progressively, in particular at the periphery (circumference) of the article, where there were gathers in the thermoplastic film (created during step b)), resulting in a thermoformed film which takes the shape and curvature of the article, as shown on figures 4 and 5, after removal of the film holder. The shrinking of the heated thermoplastic film in step c) preferably makes the gathers disappear from said thermoplastic film, on the surface of interest. In an embodiment, heating can be stopped when at least one edge of the thermoplastic film meets the edge of the article mold. This embodiment has even more synergy in cases where the article is the optical article to which the thermoplastic film is intended to be bonded. In that case, in a variant, the dimensions of the thermoplastic film are determined so that the edges of the thermoplastic film match with the edges of the article. In such embodiment it is helpful if the thermoplastic film comprises elements that enable the film holder to hold the thermoplastic film until the end of the shrinkage.

In one embodiment, heat is applied in step c) in such a manner that shrinking occurs more in the part of the thermoplastic film that will have the shape and curvature of the peripheral part of the article, and preferably mainly in said part of the thermoplastic film that will have the shape and curvature of the peripheral part of the article. Directing heat so that the shrinkage occurs more on the part of the thermoplastic film that will be near the edge of the article at the end of step c) offers the advantages of managing the gathers/folds that may have formed at the periphery of the article and inducing less deformation/stress in the part of the thermoplastic film that will be in contact with the center of the article. In the case of an ophthalmic lens, said central part is destined to be mounted in front of the eye.

In other words, in an embodiment, the heating of the thermoplastic film is non uniform, with less heat applied to the part of the thermoplastic film close to the center of the molding article and more heat, progressively or by steps, applied to the parts of the thermoplastic film farther from center of the molding article, or if the molding article is an article, farther from the center of the article.

In a variation, the parts of the thermoplastic film which are not intended to be in contact with the molding article may receive less heat.

The inventors have observed that most thermoplastic sheets contract when heated. The plastic sheets are usually produced by techniques, which involve uniaxial or biaxial stretching under heating followed by rapid cooling to keep the polymer chains oriented in a way that makes the sheets flat. The chains are thus locked in a high-strain orientation (stretched state).

Without wishing to be bound by any theory, it is believed that when the thermoplastic film is heated again sufficiently, stress is released and the thermoplastic film relaxes into a more entropically favored form. The polymer chains relax from their elongated state to a low energy orientation state, in a way that shrinks the bulk material.

Preferably, in embodiments of the disclosure, no mechanical pressure is applied on the thermoplastic film during heating and/or during the thermoforming step c) (except the optional use of a holding means to avoid that the thermoplastic film slips during this step / to push against the substrate), in particular, no membrane or stamp or mold or air pressure is used to impart a deformation to the thermoplastic film during this step in most embodiments.

The lamination on at least one portion of the surface of the optical article of the thermoformed thermoplastic film is carried out in step d). During this step, the thermoformed thermoplastic film is applied to the substrate of the optical article by making it adhere using a layer of adhesive positioned between the optical article and the thermoplastic film.

When the thermoplastic film is coated with at least one functional coating, the layer of adhesive is preferably positioned between the optical article and the surface of the thermoplastic film not coated with said at least one functional coating, particularly when the functional coating is an interferential coating, in other words on the face of the thermoplastic film opposite to the one that has the functional coating.

In another embodiment, the layer of adhesive can be positioned between the optical article and the surface of the thermoplastic film coated with said at least one functional coating. One or both main surfaces of the thermoplastic film may be coated with a functional coating such as an interferential or a colored filter coating. For example, the thermoplastic film can be coated with an interferential coating on one side and a colored filter on the other side, with an adhesive layer formed on the latter side.

Various families of adhesives may be used within the context of the invention, preferably optically clear adhesives.

These adhesives generally have an elastic modulus, or Young's modulus, of less than that of the substrate and less than that of the thermoplastic film. In general, the adhesive has an elastic modulus at room temperature of between 10³ and 10⁸ Pa. The adhesives according to the disclosure are preferably PSAs (pressure sensitive adhesives) and HMAs (hot-melt adhesives). The adhesive may also be liquid without needing to be heated.

The term "PSA" is understood to mean a dry-contact adhesive, generally of viscoelastic nature, which requires only slight pressure to adhere to the contact surface. PSAs are characterized by the fact that they require no activation by water, by a solvent or by heating in order for them to adhere permanently to a contact surface. Examples of PSAs that can be used are mentioned in the application EP 2524798, in the name of the applicant, as are the additives that may contain these PSAs. Preferably, use will be made in the context of the invention of a polyacrylate-based PSA.

In one embodiment, the adhesive is functionalized, for example comprises a filtering function such as an absorbing dye.

The PSA layer may be applied to a main surface of the thermoplastic polymer film before or after application of functional coatings on this film, preferably after. It may optionally be protected by a release layer (such as a protective liner layer) that will be the removed before the lamination step is carried out. The PSA layer may be applied before forming the thermoplastic film or after, preferably before. In one embodiment, the layer of pressure sensitive adhesive is applied to a main surface of the thermoplastic film before step b).

It is also possible in the context of the invention to use a hot-melt adhesive (HMA), which term encompasses conventional HMAs that can melt and harden a large number of times, but also reactive HMAs that are applied like conventional HMAs but which crosslink and thus form permanent adhesive bonds that it is impossible to melt again. Examples of HMAs that can be used are mentioned in application EP 2524798, in the name of the applicant, as are the additives that may contain these HMAs. Preferably, use will be made in the context of the invention of a polyurethane-based hot-melt adhesive that is in the form of an aqueous dispersion of high-molecular-weight polyurethanes.

For the application envisaged in the present invention, it is important that the chosen adhesive doesn't unwantedly reduce the transparency of the optical article obtained. The adhesive layer may of course have a cloudy appearance before application on the substrate but this cloudiness should disappear after bonding.

The thickness of the adhesive layer generally varies from 10 to 50 µm, preferably from 15 to 30 µm.

The adhesive layer is preferably applied on the thermoplastic film, but can also be applied to the substrate of the optical article prior to applying the thermoplastic film onto the optical article. Subsequently, the thermoplastic film is laminated on the substrate of the optical article, and if required, the layer of adhesive is cured.

The lamination and bonding to the surface of the optical article of non-zero radius of curvature of the thermoplastic film may be carried out according to techniques and using devices that are known in the art. Mention may be made, as examples of such processes, of those described in detail in applications EP 2018262, EP 2524798, WO 2006/105999 and WO 2009/021793, in the name of the applicant.

For example, a flexible (deformable) stamp is translated vertically, so that its geometric center is aligned with that of the optical article, and pressed to establish the contact between the thermoplastic film and the substrate on its curved-face side. Alternatively, a manual squeegee can be used to help execute the lamination step.

In an embodiment, the thermoplastic film is already placed and formed around the optical article and the role of the stamp, or alternative lamination machine, is mainly to activate by pressure or temperature, the adhesive layer of PSA, respectively HMA, and possible smooth some wrinkles. In another embodiment, the thermoplastic film is formed on a molding article different from the optical article and the thermoplastic film is then reported on the optical article. The laminating machine or stamp enables both to apply the already formed film onto the optical article and activate by pressure or temperature, the adhesive layer of PSA, respectively HMA.

If necessary, an aqueous composition containing a surfactant can be applied onto the thermoplastic film and/or optical article before the lamination step, so that some adjustments of the respective position of the thermoplastic film/adhesive layer/optical article assembly can be made after this step has been executed.

Lamination of the thermoformed film onto the optical article can be made with or without inversion of the concavity of the thermoplastic film.

In an embodiment, the thermoplastic film is positioned such that the concavity of its curvature is turned toward the convex face of the substrate, then the center of the concave face of the thermoplastic film is brought into contact with the center of the convex face of the substrate, and the thermoplastic film is applied without inverting its curvature, by driving the substrate toward the thermoplastic film or the thermoplastic film toward the substrate, with the optional help of a flexible stamp. The concave face of the thermoplastic film is advantageously coated with an adhesive layer.

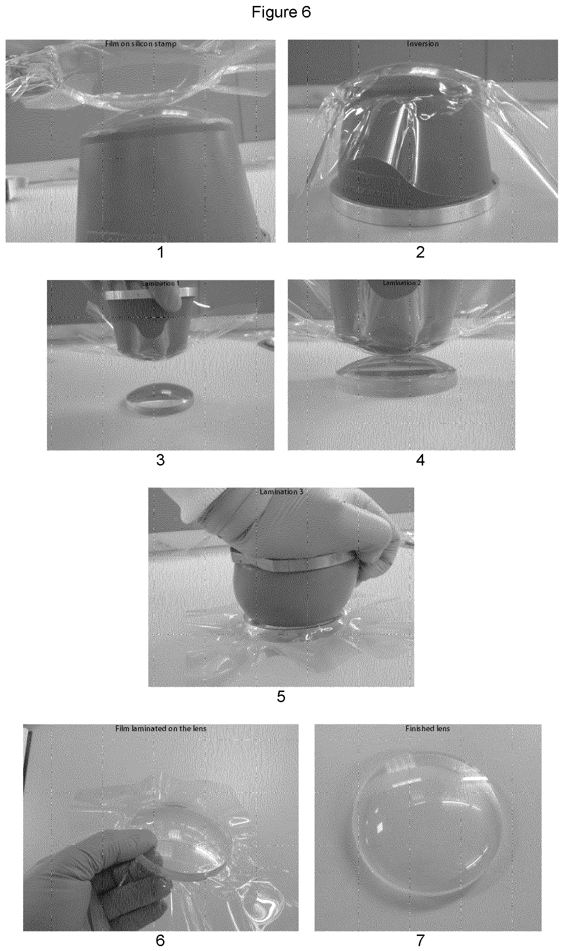

In another embodiment, the thermoplastic film is positioned such that the convexity of its curvature is turned toward the convex face of the substrate, then the center of the convex face of the thermoplastic film is brought into contact with the center of the convex face of the substrate, and the thermoplastic film is applied with the help of a flexible stamp by inverting the curvature thereof in order to gradually diffuse, radially from the center of the thermoplastic film to the periphery thereof, the conformal contact between the thermoplastic film and the substrate. An example of this embodiment is shown on figure 6. It can be seen that a double inversion of concavity is possible, depending on the concavity of the face to which it has to be applied.

Generally, when no inversion of the concavity of the thermoplastic film is required, the thermoplastic film is already in contact with the article at the end of step c), and lamination step d) can only require applying external pressure to make the thermoplastic film and the optical article to each other.

These embodiments can also be used to coat a concave face. For example, in another embodiment, the thermoplastic film is positioned such that the convexity of its curvature is turned toward the concave face of the substrate, preferably with a slightly smaller radius of curvature, then the center of the convex face of the thermoplastic film is brought into contact with the center of the concave face of the substrate, and the thermoplastic film is applied without inverting its curvature, by driving the substrate toward the thermoplastic film or the thermoplastic film toward the substrate, with the optional help of a flexible stamp. The convex face of the thermoplastic film is advantageously coated with an adhesive layer.

In one embodiment, the thermoplastic film is coated on at least one main surface with a PSA layer and a protective liner film. Said thermoplastic film has a liner-side in contact with a convex surface of the article in step a), and the protective liner film is removed after step c) and before implementing lamination step d). The thermoplastic film can also have its liner-side not in contact with a convex surface of the article in step a), so as to avoid a step of concavity inversion during lamination.

The process of the invention provides in step e) an optical article to which the thermoplastic film adheres by means, e.g., of a layer of cured liquid adhesive (HMA) or pressure-sensitive adhesive (PSA). The optical article is preferably fully covered by the thermoplastic film. When the thermoplastic film is coated with at least one functional coating, it is preferably laminated in step d) in such a manner that the optical article obtained in step e) is successively coated with the layer of adhesive, the thermoplastic film and the at least one functional coating.

This process can advantageously be automated using roll-to-roll processing. In the case where an interferential coating comprising a stack of thin layers is desired, association of the optical article by lamination of a plastic sheet with vacuum deposited thin layers or wet coated thin layers allows for high throughput process by roll-to-roll.

Further, in the case where a filtering interferential coating comprising at least one dye is desired, association of the optical article by lamination of a dyed plastic sheet provides better color homogeneity than by mass tinting the substrate of the optical article, especially when the optical article comprises a plurality of zones with different thicknesses.

The following examples illustrate the invention in more detail but without implied limitation. Unless otherwise indicated, all the thicknesses mentioned in the present patent application are physical thicknesses.

### EXAMPLES

### 1. Materials

The articles employed in the examples were 67 mm-diameter ORMA^{®} lens substrates (polymer obtained by polymerization of diethylene glycol bis (allyl carbonate) from Essilor based on CR-39^{®} monomer, refractive index = 1.5), with 5.5 base (power: -4.00 in examples 1-4, + 4.00 in examples 5-8), having been subjected to an oxygen plasma surface treatment under reduced pressure. The lenses had their concave or convex sides coated according to the inventive process.

The thermoplastic films used in the examples for the lamination process were 40 µm and 80 µm thick TAC films from the LOFO Company, and 125 µm thick PET films from the Torray company.

The treating machine was a 1200 DLF from Satis, or a BAK4 machine from Balzers equipped with an electron gun, a thermal evaporator, and a KRI EH 1000 F ion gun (from Kaufman & Robinson Inc.) for use in the preliminary phase of preparation of the surface of the substrate by argon ion bombardment (IPC) and in the ion-assisted deposition (IAD) of layers, when necessary.

In examples 7-8, the surface of the thermoplastic film was cleaned by treatment with an aqueous solution of sodium hydroxide, concentrated to 10%, at 60°C for 4 minutes, followed by a step of rinsing with softened water and drying with hot air (60°C), and a hard coat was applied on the thermoplastic film by spin coating, of a curable abrasion-resistant coating composition (comprising, relative to the total weight of the composition, 22% of γ-glycidoxypropylmethyldimethoxysilane, 62% of colloidal silica present at 30% in methanol, and 0.70% of aluminum acetylacetonate). The abrasion-resistant layer had a thickness of around 4 µm. This layer was subsequently subjected to crosslinking by heating at 100°C for 3 hours.

In example 8, the antireflection coating was applied on the hard coat by evaporation under vacuum, and comprised a 150 nm thick SiO₂ sub-layer and the stack ZrO₂/SiO₂/ZrO₂/ITO/SiO₂ (respective thicknesses of the layers: 29, 23, 68, 7 and 85 nm). An ITO layer is an electrically conductive layer of indium oxide doped with tin (In₂O₃:Sn).

### 2. Selection of adequate films for the lamination by shrinkage process

It is preferable to use thermoplastic films having an isotropic shrinkage behavior when heated.

A thin strip was cut in the evaluated film in the direction of unreeling of the commercial film roll (longitudinal) and in the perpendicular direction (transversal) to assess the thermoplastic film isotropy. It was marked with a grid, or any other set of symbols, for example using paint or a pen, and photographed. An annealing of the thermoplastic film was performed for 3h at 110°C and another photograph was taken. Comparison of the photographs of the thermoplastic film before and after annealing allowed to calculate the longitudinal and transversal shrinking rate of the thermoplastic film. Image analysis of the deformations has been done, which uses a deformation measurement system comprising an image capturing device comprising two cameras that take separate images, with two different angles, in order to enable a three-dimensional reconstruction, and software for analyzing the images provided by the cameras. The computer analyzing the two reconstructed 3D films strips may then determine the deformation in all positions by comparing the deformation of the grid or symbols marked on the thermoplastic film.

Some suitable films showing isotropic behavior upon heat-induced shrinking were identified by the inventors the polycarbonate film sold by the company Teijin Kasei under the reference ACE C110, TAC films from the FUJI or LOFO company, a PET film from the Torray company. Polyethylene naphthalate and polyimide films were also suitable.

An example of a film shrinking in an anisotropic way is a PMMA film from Mitsubishi Rayon.

### 3. Preparation of thermoplastic films having a PSA layer

A commercial PSA film of acrylic nature from 3M (ref 8146-1) having a protective liner film on each side of a 25 µm thick PSA layer was used. A protective liner from one side of the PSA film was removed, and the thermoplastic film was laminated to a 40 µm thick TAC film (examples 1-4) using a nip laminator. The result was an assembly (laminate) TAC/PSA/protective liner film.

The thermoplastic films used in examples 5-8 and described below were prepared similarly.

### Example 1

1. The thermoplastic film to be thermoformed and laminated was first placed over the target lens, with the liner-side in contact with the lens convex surface (figure 2).
2. To prevent the thermoplastic film from moving during the application of heat, a film was placed around the lens to hold the thermoplastic film in place. This film holder had a diameter much larger than the diameter of the lens, as shown on figure 3, and had an opening which is itself much larger than the diameter of the lens.
3. As the apex of the lens is at a different level than a plane formed by the opening of the film holder maintaining the thermoplastic film, the lens pushed on the thermoplastic film, and gathers in the thermoplastic film were formed; as the lens is pseudo spherical and convex the gathers are mostly on the circumference of the lens (figure 3).
4. A heat source was brought close to the lens to a distance of about 20 cm from the lens. Due to the nature of the heat source, it needed to be moved in order to distribute the heat, to avoid the creation of localized burns on the thermoplastic film. This distance was adjusted to control the shrinkage speed of the thermoplastic film. The source was positioned and displaced in order to ensure that the shrinkage of the thermoplastic film happens at least and principally at the circumference of the lens where there were gathers in the thermoplastic film. No pressure was applied on the thermoplastic film during heating.
5. Upon heating, the thermoplastic film shrunk progressively, resulting in a thermoformed film which took the shape and curvature of the lens, as shown on figures 4 and 5. When the thermoplastic film met the edge of the lens, heating was stopped.
6. The protective liner film, which prevented the PSA layer from sticking to the lens, was removed.
7. As shown on figure 6, the thermoplastic film was first placed over a silicone stamp and pushed to invert the concavity (photo 2 of figure 6). Then the thermoplastic film was laminated to the lens with the help of a deformable rubber stamp, which presses the thermoplastic film to the lens from the middle to the edge without trapping air bubbles (photos 3-5 on figure 6). A uniform pressure of around 0.03 MPa was applied. The lens was fully covered by the thermoplastic film.

In step 2 of the current example, if the thermoplastic film is not correctly maintained with regard to the lens, it is difficult to correctly thermoform the stack TAC/PSA/protective liner. In some cases the heating could thermoform only some parts of the thermoplastic film, resulting in creases or gathers remaining over the some areas of the surface of the lens after lamination of the film on the lens.

In step 4 of the current example, if the heat source is placed too close to the lens during thermoforming (for example at a distance of 10 cm in this specific case), the thermoplastic film is overheated and a burn blister can be made on this TAC/PSA/ protective liner film. Such movement or care may not be needed if other heat sources are used.

In another experiment (example 2), the thermoplastic film was pressed in step 7 directly against the lens to make a lens with the thermoplastic film laminated on its convex face, the application of the rubber stamp forming the mentioned curvature inversion.

In another experiment (example 3), the TAC/PSA/protective liner film was positioned such that the protective liner was furthest from the substrate in step 1 (with the TAC-side in contact with the lens surface). In this case, it is not necessary to invert the concavity of the thermoplastic film when it is placed over the rubber stamp in step 7.

In another experiment (example 4), the TAC/PSA/protective liner film was applied on the concave side of the lens after being formed on the convex side of a carrier having a convex curvature sensibly matching the concave curvature of concave side of the lens. The PSA liner in this case is to be positioned as in example 3 during the forming, so as to find itself on the convex side of the formed film.

In examples 1-4, the result was an assembly TAC/PSA/lens with no optical defect.

### Examples 5-8

Different TAC and PET films with or without functional coatings were prepared as described above and laminated onto +4.00 Orma^{®} clear lenses as in example 1. The results are shown in the table below. The maximum shrinkage rate is the maximum of the longitudinal and transversal shrinking rate of the thermoplastic film as detailed in § 2 above.

| Example | 5 | 6 | 7 | 8 |
|---|---|---|---|---|
| Film type | TAC 40 µm | TAC 80 µm | TAC 80 µm + hard coat on both sides | PET 125 µm + hard coat and antireflection coating on one side (*) |
| Maximum shrinkage rate | -1% | -0,6% | -0,6% | -0,6% |

| | | | | |
|---|---|---|---|---|
| (*) The protective liner film was present of the side of the PET film not bearing the functional coatings (hard coat and antireflection coating). | | | | |

No cracks were generated in the antireflection coating following the process of lamination by shrinkage according to the invention, due to the limited shrinkage level. No optical defects were observed.

## Claims

1. A process comprising the successive following steps:
a) providing a thermoplastic film and an article having a non-zero radius of curvature,
b) moving relatively to each other said thermoplastic film and said article to bring them into contact,
c) applying heat to the thermoplastic film so that the heated thermoplastic film shrinks and takes the shape and curvature of the article, resulting in a thermoformed thermoplastic film.

2. The process of claim 1, wherein the article is a mold part, and further comprising:
d) laminating said thermoformed thermoplastic film on a surface of an optical article having a non-zero radius of curvature by means of a layer of adhesive, said layer of adhesive being positioned between the optical article and the thermoplastic film,
e) obtaining an optical article having a non-zero radius of curvature coated with the layer of adhesive and the thermoplastic film,
wherein the mold part has a surface sensibly matching the surface of the optical article intended to be laminated with the thermoplastic film or complementary to said surface.

3. The process of claim 1, wherein the article is an optical article, and further comprising:
d) laminating said thermoformed thermoplastic film on a surface of the optical article by means of a layer of adhesive, said layer of adhesive being positioned between the optical article and the thermoplastic film,
e) obtaining an optical article having a non-zero radius of curvature coated with the layer of adhesive and the thermoplastic film.

4. A process according to any one of claims 2 to 3, wherein the thermoplastic film is coated with at least one functional coating and is laminated in step d) in such a manner that the optical article obtained in step e) is successively coated with the layer of adhesive, the thermoplastic film and the at least one functional coating.

5. A process according to any one of claims 2 to 4, wherein the layer of adhesive is a layer of pressure sensitive adhesive applied to a main surface of the thermoplastic film, preferably before step b).

6. A process according to any one of the preceding claims, wherein the thermoplastic film is made of a material exhibiting a sensibly isotropic thermal shrinkage in step c).

7. A process according to any one of the preceding claims, wherein the thermoplastic film and the article are maintained in place by a film holder during step c).

8. A process according to claim 7, wherein the film holder is not in contact with the thermoplastic film in a geometrically defined surface where the thermoplastic film is in contact with the article.

9. A process according to any one of the preceding claims, wherein the thermoplastic film provided in step a) has a thickness of 80 µm or less.

10. A process according to any one of the preceding claims, wherein the thermoplastic film is a polyethylene terephthalate film or a cellulose triacetate film.

11. A process according to any one of the preceding claims, wherein in step b) part of the thermoplastic film is pushed past an initial point of contact with the article, preferentially past the edges of a spherical or pseudo spherical surface of the article.

12. A process according to any one of the preceding claims, wherein heat is applied in step c) in such a manner that shrinking occurs more in the part of the thermoplastic film that will have the shape and curvature of the peripheral part of the article.

13. A process according to any one of claims 2 to 12, wherein the optical article is an ophthalmic lens.

14. A process according to any one of the preceding claims, wherein no stretching of the thermoplastic film is performed.

15. A process according to any one of the preceding claims, wherein the diameter of the thermoplastic film is higher than the diameter of the article.
